# EUROPÄISCHE PATENTANMELDUNG

(11) **EP 3 959 957 A1**
(43) Veröffentlichungstag der Anmeldung: **02.03.2022**
(21) Anmeldenummer: 21181055.1
(22) Anmeldetag: 23.06.2021
(51) Int. Cl.: A01D 43/08

(54) **FELDHÄCKSLER**

(30) Priorität: 25.08.2020 DE 102020122208
(71) Anmelder: CLAAS Selbstfahrende Erntemaschinen GmbH, 33428 Harsewinkel (DE)
(72) Erfinder: Belau, Sven Carsten, 33332 Gütersloh (DE); Fischer, Frédéric, 59823 Arnsberg (DE); Heitmann, Christoph, 48231 Warendorf (DE); Bönig, Ingo, 33330 Gütersloh (DE)
(74) Vertreter: CLAAS Gruppe

(57) **Zusammenfassung**

Die Erfindung betrifft einen Feldhäcksler mit mindestens einem Arbeitsaggregat (2) zur Verarbeitung von Erntegut (4) eines Feldbestandes (3), wobei das Erntegut Kornbestandteile (5) umfasst, wobei das Erntegut (4) im Betrieb des Feldhäckslers (1) in einem Erntegutstrom (E) entlang eines Ernteguttransportweges (7) durch den Feldhäcksler (1) transportiert wird, wobei der Feldhäcksler als Arbeitsaggregat (2) einen in dem Erntegutstrom angeordneten Corncracker (8) aufweist, wobei der Feldhäcksler eine Kontrollanordnung (9) aufweist, die ein an dem Ernteguttransportweg (7) hinter dem Corncracker angeordnetes optisches Messsystem (10) aufweist, wobei das optische Messsystem (10) eine Kamera (11) zur Aufnahme von Bilddaten des Ernteguts (4) aufweist, wobei die Kamera hinter dem Corncracker (8) angeordnet ist, wobei das optische Messsystem (10) in einer Messroutine Bilddaten des Ernteguts (4) erfasst, wobei die Kontrollanordnung (9) in einer Bilderkennungsroutine mittels eines Bilderkennungsalgorithmus in den Bilddaten Bild-Regionen (12) ermittelt, die jeweils einem zerkleinerten Kornbestandteil (5) zugeordnet sind. Es wird vorgeschlagen, dass die Kontrollanordnung (9) in der Bilderkennungsroutine geometrische Eigenschaften der zerkleinerten Kornbestandteile (5) ermittelt aus den geometrischen Eigenschaften nach einer vorbestimmten Berechnungsvorschrift einen Indikator für eine Aufbereitungsqualität der zerkleinerten Kornbestandteile (5) ermittelt.

## Beschreibung

Die Erfindung betrifft einen Feldhäcksler gemäß dem Oberbegriff von Anspruch 1.

Feldhäcksler ernten einen Feldbestand von einem Feld ab und verarbeiten das so gewonnene Erntegut mittels einer Reihe von Arbeitsaggregaten. Ein primäres und vorliegend besonders interessantes Einsatzgebiet von Feldhäckslern ist die Ernte von Mais. Bei dieser Ernte wird häufig mittels des Feldhäckslers die gesamte Maispflanze inklusive der Maiskolben aufgenommen und gehäckselt. Das so gewonnene Erntegut wird insbesondere zur Fütterung von Nutztieren, vor allem Wiederkäuern, verwendet. Eine alternative Verwendungsmöglichkeit ist die Nutzung in Biogasanlagen.

Besonders bei der Verwendung des Ernteguts als Futtermittel für Tiere und bei der Verwendung in Biogasanlagen ist wichtig, dass die Kornbestandteile des Ernteguts aufgeschlossen, also zerkleinert, werden. Wichtig ist das Aufschließen der Kornbestandteile, damit die darin enthaltene Stärke zugänglich wird und nicht durch die Hülle des Kornbestandteils geschützt wird. Das Aufschließen der Kornbestandteile geschieht einerseits durch das Häckseln des Ernteguts und andererseits wesentlich durch einen Corncracker des Feldhäckslers. Dieser Corncracker kann zwar so eingestellt werden, dass mit Sicherheit alle Kornbestandteile stark zerkleinert sind, eine derartige Einstellung verbraucht jedoch unnötig viel Kraftstoff.

Der bekannte Feldhäcksler (DE 10 2014 011 308 A1), von dem die Erfindung ausgeht, weist mindestens ein Arbeitsaggregat zum Abernten eines Feldbestandes und zur Verarbeitung von Erntegut des Feldbestandes auf. Das Kornbestandteile und Nicht-Kornbestandteile umfassende Erntegut wird im Betrieb des Feldhäckslers in einem Erntegutstrom entlang eines Ernteguttransportweges durch den Feldhäcksler transportiert. Der Feldhäcksler weist weiterhin eine Kontrollanordnung auf, die ein an dem Ernteguttransportweg angeordnetes optisches Messsystem aufweist. Das optische Messsystem weist eine Kamera zur Aufnahme von Bilddaten des Ernteguts des Erntegutstroms auf. Anhand dieser Bilddaten werden die Kornbestandteile in zerkleinerte und nicht-zerkleinerte Kornbestandteile unterteilt, um so den Betrieb des Feldhäckslers zu optimieren.

Es ist jedoch so, dass allein die Trennung zwischen aufgeschlossenen, beziehungsweise zerkleinerten, und nicht-zerkleinerten Kornbestandteilen sich als noch nicht ausreichend herausgestellt hat. Auch die zerkleinerten Kornbestandteile weisen je nach Zerkleinerungsgrad noch unterschiedliche Aufbereitungsqualitäten auf. Die Ermittlung der Aufbereitungsqualität kann somit noch verbessert werden.

Der Erfindung liegt das Problem zugrunde, den bekannten Feldhäcksler derart auszugestalten und weiterzubilden, dass die Ermittlung der Aufbereitungsqualität verbessert wird.

Das obige Problem wird bei einem Feldhäcksler gemäß dem Oberbegriff von Anspruch 1 durch die Merkmale des kennzeichnenden Teils von Anspruch 1 gelöst.

Wesentlich ist die grundsätzliche Überlegung, dass durch eine Ermittlung geometrischer Eigenschaften von zerkleinerten Kornbestandteilen die Aufbereitungsqualität der zerkleinerten Kornbestandteile ermittelt werden kann.

Im Einzelnen wird vorgeschlagen, dass die Kontrollanordnung in der Bilderkennungsroutine auf Basis der jeweiligen Bild-Regionen geometrische Eigenschaften der jeweils zugeordneten zerkleinerten Kornbestandteile ermittelt und dass die Kontrollanordnung in der Bilderkennungsroutine aus den geometrischen Eigenschaften nach einer vorbestimmten Berechnungsvorschrift einen Indikator für eine Aufbereitungsqualität der zerkleinerten Kornbestandteile ermittelt.

Die Unterscheidung von Kornbestandteilen und Nicht-Kornbestandteilen ist bei einer optischen Analyse bei unterschiedlichen Wellenlängen des aufgenommenen Lichts unterschiedlich gut möglich. Auch die Erkennung der geometrischen Eigenschaften kann wellenlängenabhängig sein. Es ist daher bei Ausgestaltungen der Ansprüche 2 und 3 so, dass die Kamera eine Multispektralkamera oder eine Hyperspektralkamera ist. Bei einer Ausgestaltung gemäß Anspruch 4 nimmt die Kamera sichtbares Licht und infrarotes Licht auf. Besonders infrarotes Licht ist zur Unterscheidung von Kornbestandteilen und Nicht-Kornbestandteilen gut geeignet.

Statt einer Multispektralkamera oder Hyperspektralkamera kann auch eine RGB-Kamera mit einer IR-Kamera kombiniert werden. Diese Möglichkeit ist Gegenstand von Anspruch 5. Grundsätzlich kann auch eine Kombination der Multispektralkamera oder Hyperspektralkamera mit einer RGB-Kamera vorgesehen sein.

Anspruch 6 betrifft bevorzugte Ausgestaltungen von Sensorelementen der Kamera und der IR-Kamera.

Um die Ermittlung der geometrischen Eigenschaften sowie der Bild-Regionen, die den Kornbestandteilen zugeordnet sind, zu verbessern, kann gemäß Anspruch 7 vorgesehen sein, dass der Bilderkennungsalgorithmus auf machine-learning, insbesondere deep-learning, basiert.

Die Ansprüche 8 und 9 geben bevorzugte Ausgestaltungen der geometrischen Eigenschaften des Indikators für die Aufbereitungsqualität an. Diese sind darauf ausgerichtet, die tatsächliche Aufbereitungsqualität des Ernteguts möglichst präzise nachzubilden.

Anspruch 10 gibt bevorzugt vorhandene Arbeitsaggregate des Feldhäckslers an. Diese können mit Maschinenparametern einstellbar sein.

Gemäß Anspruch 11 kann die IR-Kamera entlang des Ernteguttransportweges hinter dem Corncracker angeordnet sein. Es kann insbesondere vorgesehen sein, dass die Verarbeitung des Ernteguts mit dem Corncracker im Wesentlichen abgeschlossen wird, wodurch eine Anordnung der Kamera hinter dem Corncracker besonders vorteilhaft wird.

Der Indikator für die Aufbereitungsqualität kann einem Benutzer angezeigt werden. Es kann vorgesehen sein, dass der Benutzer einen zu erreichenden Wert für den Indikator für die Aufbereitungsqualität vorgeben kann. Diese Ausgestaltungen sind Gegenstand von Anspruch 12. Somit wird es dem Benutzer ermöglicht, seine Zielvorgaben an den Feldhäcksler zu übergeben und, bei einer Ausgestaltung gemäß Anspruch 13, den Feldhäcksler die Optimierung der Aufbereitungsqualität übernehmen zu lassen. Anspruch 14 gibt dabei bevorzugte Optimierungsziele an.

Anspruch 15 betrifft bevorzugte Ausgestaltungen der Optimierung der Aufbereitungsqualität.

Im Folgenden wird die Erfindung anhand einer lediglich ein Ausführungsbeispiel darstellenden Zeichnung näher erläutert. In der Zeichnung zeigt:
- Fig. 1: einen vorschlagsgemäßen Feldhäcksler mit einer Kontrollanordnung, die schematisch die Aufnahme des Ernteguts mittels des optischen Messsystems zeigt, und
- Fig. 2: eine mögliche Benutzeroberfläche zur Interaktion mit der Kontrollanordnung.

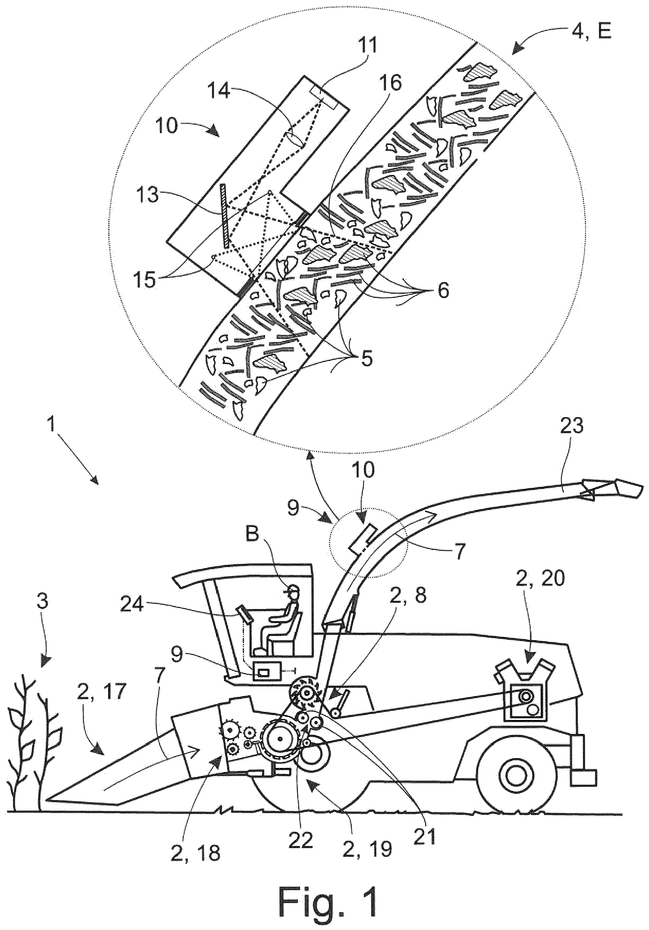

Der in Fig. 1 dargestellte Feldhäcksler 1 weist mindestens ein Arbeitsaggregat 2 zum Abernten eines Feldbestandes 3 und/oder zur Verarbeitung von Erntegut 4 des Feldbestandes 3 auf. Hier und vorzugsweise handelt es sich bei dem Feldbestand 3 um Maispflanzen. Grundsätzlich kann vorgesehen sein, dass der Feldhäcksler 1 den Feldbestand 3 aberntet. Alternativ kann der Feldhäcksler 1 jedoch auch bereits abgeernteten Feldbestand 3 lediglich aufnehmen. Das so gewonnene Erntegut 4 wird sodann von dem Feldhäcksler 1 verarbeitet, insbesondere gehäckselt.

Naturgemäß umfasst das Erntegut 4 Kornbestandteile 5 und Nicht-Kornbestandteile 6. Bei den Kornbestandteilen 5 kann es sich um Maiskörner der Maispflanzen handeln. Die Nicht-Kornbestandteile 6 können dann Blätter, Stängel und dergleichen der Maispflanze sein.

Im Betrieb des Feldhäckslers 1 wird das Erntegut 4 in einem Erntegutstrom E entlang eines Ernteguttransportweges 7 durch den Feldhäcksler 1 transportiert. Wie in der Vergrößerung in Fig. 1 zu erkennen, sind in dem Erntegutstrom E die Kornbestandteile 5 und die Nicht-Kornbestandteile 6 miteinander vermischt. Der Ernteguttransportweg 7 ist in Fig. 1 lediglich andeutungsweise gezeigt. Er verläuft auf übliche Art und Weise durch den Feldhäcksler 1. Der Erntegutstrom E kann sich im Feldhäcksler 1 in einen Haupterntegutstrom und kleinere Teil-Erntegutströme unterteilen. Alle Ausführungen zum Erntegutstrom E können sich entsprechend auf den Haupterntegutstrom oder einen Teil-Erntegutstrom beziehen.

Der Feldhäcksler 1 weist als Arbeitsaggregat 2 einen in dem Erntegutstrom E angeordneten Corncracker 8 auf, der im Betrieb die Kornbestandteile 5 zerkleinert. Der Corncracker 8 zerfasert auch die Nicht-Kornbestandteile 6, wobei diese Funktion vorliegend nicht von zentraler Bedeutung ist.

Der Feldhäcksler 1 weist eine Kontrollanordnung 9 auf, die ein an dem Ernteguttransportweg 7 angeordnetes optisches Messsystem 10 aufweist. Das optische Messsystem 10 weist eine Kamera 11 zur Aufnahme von Bilddaten des Ernteguts 4 des Erntegutstroms E auf. Unter den Begriff "Kamera" fallen dabei beliebige optische Sensoren, die ortsaufgelöst Bilddaten aufnehmen. Der Begriff "ortsaufgelöst" bedeutet hier, dass es in den Bilddaten möglich ist, Einzelheiten des Ernteguts 4 zu unterscheiden. Ein reines Spektrometer beispielsweise, das nur einen Bildpunkt aufnimmt, fällt nicht unter den Begriff der Kamera. Die Kamera 11 weist also zumindest genügend Pixel auf, um die vorschlagsgemäße, noch zu erläuternde Bilderkennung zu ermöglichen. Die Kamera 11 ist entlang des Ernteguttransportweges 7 hinter dem Corncracker 8 angeordnet, sodass sie die bereits zerkleinerten Kornbestandteile 5 aufnimmt.

Das optische Messsystem 10 erfasst in einer Messroutine mittels der Kamera Bilddaten des Ernteguts 4. Diese Messroutine wird entsprechend während des Betriebs des Feldhäckslers 1 durchgeführt.

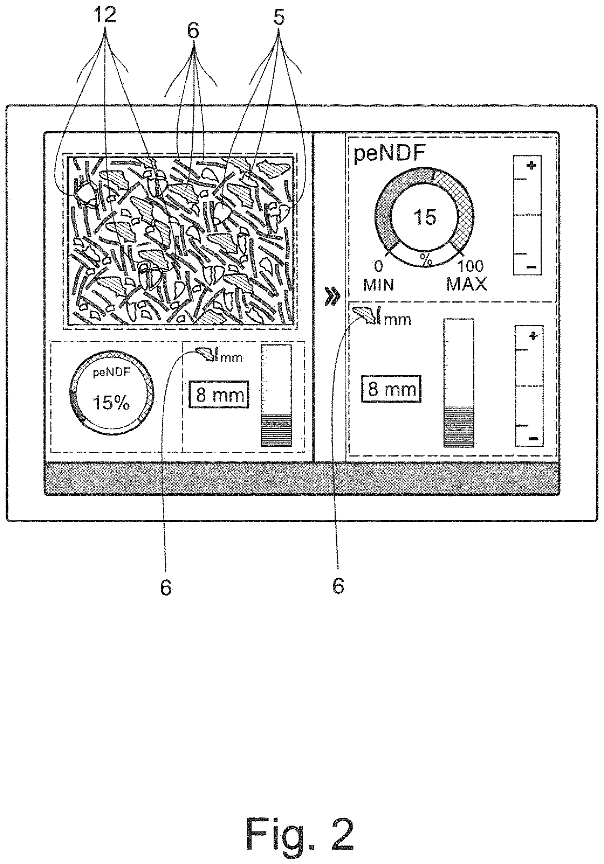

Die Kontrollanordnung 9 ermittelt in einer Bilderkennungsroutine mittels eines Bilderkennungsalgorithmus in den Bilddaten Bild-Regionen 12, die jeweils einem Kornbestandteil 5 zugeordnet sind. Der Bilderkennungsalgorithmus kann dabei ein beliebiger, für die vorliegende Aufgabe geeigneter Bilderkennungsalgorithmus sein. Er kann Vorbereitungsschritte, Kantenerkennung, Farberkennung, komplexere Elementerkennungsalgorithmen und dergleichen umfassen. Die so ermittelten Bild-Regionen 12 stimmen hier und vorzugsweise mit den Abbildungen der Kornbestandteile 5 in den Bilddaten überein. Alternativ können sie beispielsweise teilweise auch Zwischenräume zwischen den Kornbestandteilen 5 mit umfassen oder anderweitig gewählt sein. Entsprechend sind die Bild-Regionen 12 in Fig. 2 lediglich beispielhaft gewählt.

Wesentlich ist nun, dass die Kontrollanordnung 9 in der Bilderkennungsroutine auf Basis der jeweiligen Bild-Regionen 12 geometrische Eigenschaften der jeweils zugeordneten Kornbestandteile 5 ermittelt. Beispiele für die geometrischen Eigenschaften werden im Folgenden noch gegeben. Ein Beispiel für geometrische Eigenschaften wäre beispielsweise eine Kontur eines Kornbestandteils 5.

Die Kontrollanordnung 9 ermittelt in der Bilderkennungsroutine aus den geometrischen Eigenschaften nach einer vorbestimmten Berechnungsvorschrift einen Indikator für eine Aufbereitungsqualität des Ernteguts 4. Hier und vorzugsweise ermittelt die Kontrollanordnung 9 die geometrischen Eigenschaften in den Bild-Regionen 12, insbesondere durch Vermessen der Bild-Regionen 12.

Es kann vorgesehen sein, dass in der Bilderkennungsroutine alle oder im Wesentlichen alle Kornbestandteile 5 und Nicht-Kornbestandteile 6 in den Bilddaten erkannt werden.

Im Folgenden soll nun zuerst das optische Messsystem 10 erläutert werden. Es kann vorgesehen sein, dass die Kamera 11 eine Multispektralkamera ist. Vorzugsweise nimmt die Multispektralkamera Licht aus mindestens drei, vorzugsweise mindestens vier, weiter vorzugsweise mindestens fünf, unterscheidbaren Wellenlängenbereichen auf. Zusätzlich oder alternativ nimmt die Multispektralkamera vorzugsweise Licht aus höchstens 15, vorzugsweise höchstens zehn, weiter vorzugsweise höchstens acht, unterscheidbaren Wellenlängenbereichen auf.

Alternativ kann vorgesehen sein, dass die Kamera 11 eine Hyperspektralkamera ist. Vorzugsweise nimmt die Hyperspektralkamera Licht aus mindestens 50, vorzugsweise mindestens 80, weiter vorzugsweise mindestens 150, unterscheidbaren Wellenlängenbereichen auf.

Sowohl eine Multispektralkamera als auch eine Hyperspektralkamera zeichnen sich dadurch aus, dass sie jeweils eine örtliche und eine spektrale Auflösung aufweisen. Die Aufnahme entlang des Spektrums oder die örtliche Aufnahme kann dabei entweder gleichzeitig oder sequentiell erfolgen. Hier und vorzugsweise erfolgen die örtliche und die spektrale Aufnahme gleichzeitig. Die Multispektralkamera und die Hyperspektralkamera unterscheiden sich somit einerseits physikalisch durch ihren Aufbau und andererseits konzeptionell durch die Menge der aufnehmbaren, unterscheidbaren Wellenlängenbereiche. Der Begriff "unterscheidbare Wellenlängenbereiche" bezieht sich dabei darauf, dass Licht aus den unterscheidbaren Wellenlängenbereichen auch in den aufgenommenen Bilddaten noch unterscheidbar ist.

Sowohl bei der Multispektralkamera als auch bei der Hyperspektralkamera ist vorgesehen, dass diese für jeden Spektralbereich eine Ortsauflösung aufweist. Dabei können unterschiedliche Techniken zum Einsatz kommen. Eine Möglichkeit ist ein Beugegitter. Es kann jedoch auch vorgesehen sein, dass die Multispektralkamera mit Filterelementen nach Art eines Bayer-Patterns aufgebaut ist. Dann weist die Multispektralkamera flächig Sensorelemente auf, die eine Ortsauflösung abbilden und gleichzeitig matrixartig mit einem Muster aus Filterelementen überzogen sind, das benachbarten Sensorelementen unterschiedliche Wellenlängenbereiche zuordnet. Streng genommen existiert dann pro Bildpunkt nur ein Wellenlängenbereich. Durch das Zusammenfassen von Bildpunkten zu einem Pixel der näherungsweise den gleichen örtlichen Punkt abbildet, wird dieser Aufbau hier dennoch der Multispektralkamera zugeschlagen.

Hier und vorzugsweise nimmt die Multispektralkamera mindestens einen Wellenlängenbereich von nicht-sichtbarem Licht auf. Es ist somit ersichtlich, dass vorliegend eine weite Definition von Optik verwendet wird, die nicht nur den sichtbaren Wellenlängenbereich betrifft. Aufgrund der zum Teil leicht voneinander abweichenden Definitionen des sichtbaren Wellenlängenbereichs wird hier unter sichtbarem Licht der Wellenlängenbereich zwischen 380 nm und 780 nm verstanden.

Hier und vorzugsweise ist vorgesehen, dass die Kamera 11, insbesondere die Multispektralkamera, sichtbares Licht und infrarotes Licht, insbesondere nah-infrarotes Licht, aus unterschiedlichen Wellenlängenbereichen aufnimmt. Vorzugsweise nimmt die Kamera 11 mindestens einen roten und/oder mindestens einen grünen und/oder mindestens einen blauen Wellenlängenbereich auf. Weiterhin kann vorgesehen sein, dass die Kamera 11 nah-infrarotes Licht aus mindestens einem, vorzugsweise mindestens zwei, unterscheidbaren Wellenlängenbereichen aus dem Bereich bis 1100 nm aufnimmt.

Das in Fig. 1 dargestellte optische Messsystem 10 weist neben der Kamera 11 auch eine Optik auf. Diese Optik umfasst hier einen Spiegel 13 und eine Linse 14. Weiterhin umfasst das optische Messsystem 10 eine Lichtquelle 15. In Fig. 1 ist auch gezeigt, dass die Kamera 11 ein Sichtfeld 16 aufweist, in dem sie Licht des Ernteguts 4 detektieren kann. Das in Fig. 2 gezeigte Abbild des Ernteguts 4 stammt entsprechend aus diesem Sichtfeld 16. Es handelt sich hier wie aus Fig. 1 ersichtlich um eine Reflektionsmessung. Alternativ oder zusätzlich kann auch eine Transmissionsmessung vorgesehen sein.

In einer alternativen Ausführungsform kann die Kamera 11 eine sichtbares Licht aufnehmende Kamera, insbesondere eine RGB-Kamera, sein. Das optische Messsystem 10 kann dann zusätzlich eine infrarotes Licht aufnehmende IR-Kamera, insbesondere nah-infrarotes Licht aufnehmende NIR-Kamera, zur Aufnahme von IR-Bilddaten des Ernteguts 4 in einem Ausschnitt des Erntegutstroms E aufweisen. Die Bilddaten können dann RGB-Bilddaten sein und das optische Messsystem 10 kann in der Messroutine mittels der IR-Kamera IR-Bilddaten des Ernteguts 4 erfassen und in der Bilderkennungsroutine den Indikator für die Aufbereitungsqualität aus den RGB-Bilddaten und den IR-Bilddaten ermitteln. Vorzugsweise wird dies umgesetzt, indem der Spiegel 13 ein halbdurchlässiger Spiegel ist. Vorzugsweise ist die IR-Kamera dabei hinter dem halbdurchlässigen Spiegel angeordnet wird.

Sofern eine IR-Kamera als weitere Kamera vorgesehen ist, weist diese auch ein Sichtfeld auf. Es ist dann vorzugsweise vorgesehen, dass das Sichtfeld 16 der Kamera 11 und das Sichtfeld der IR-Kamera einander überlappen, insbesondere zu mindestens 50 %, vorzugsweise im Wesentlichen vollständig, überlappen. So ist es auf einfache Art und Weise möglich, die Bilddaten und die IR-Bilddaten einander örtlich zuzuordnen.

Es kann vorgesehen sein, dass die Kamera 11 und/oder die IR-Kamera, vorzugsweise im Wesentlichen nur, optische Sensorelemente auf Siliziumbasis oder Indium-Gallium-Arsenid-Basis aufweist. Sensorelemente auf Siliziumbasis sind dabei günstiger, jedoch hinsichtlich des aufnehmbaren Wellenlängenbereichs beschränkter.

Der Bilderkennungsalgorithmus basiert hier und vorzugsweise auf machine-learning, insbesondere deep-learning, also auf einem Einlernen des Algorithmus anhand von Referenzdaten oder Feedbacks.

Die geometrischen Eigenschaften umfassen hier und vorzugsweise geometrische Abmessungen der Kornbestandteile 5. Die geometrischen Abmessungen können eine kürzeste Seitenlänge und/oder eine größte Seitenlänge und/oder eine Querschnittsfläche umfassen. So werden hier und vorzugsweise Kornbestandteile 5 mit einer maximalen Querschnittsfläche als zerkleinert betrachtet und gehen in den Indikator für die Aufbereitungsqualität eingehen.

Der Indikator für die Aufbereitungsqualität kann einen Anteil an Kornbestandteilen 5 mit vorbestimmten geometrischen Eigenschaften an dem Erntegut 4 oder den Kornbestandteilen 5 abbilden und die Berechnungsvorschrift ein Bilden des Anteils umfassen. Dies ist hier und vorzugsweise der Anteil an Kornbestandteilen 5 mit einer vorbestimmten maximalen und minimalen Querschnittsfläche.

Die Arbeitsaggregate 2 des Feldhäckslers 1 können zumindest teilweise mit Maschinenparametern einstellbar sein. Im Folgenden werden einige der bevorzugt vorhandenen Arbeitsaggregate 2 bei einem Feldhäcksler 1 näher beleuchtet.

Es kann vorgesehen sein, dass der Feldhäcksler 1 als Arbeitsaggregat 2 ein den Erntegutstrom E erzeugendes Vorsatzgerät 17 zum Aufnehmen des Feldbestandes 3 aufweist. Dieses Aufnehmen kann ein Abernten umfassen. Der Feldhäcksler 1 kann als Arbeitsaggregat 2 zusätzlich oder alternativ in dem Erntegutstrom E angeordnete Vorpresswalzen 18 mit einer Drehzahl aufweisen, über die eine Häcksellänge des Ernteguts 4 einstellbar ist. Zusätzlich oder alternativ kann der Feldhäcksler 1 als Arbeitsaggregat 2 eine in dem Erntegutstrom E angeordnete Häckseltrommel 19 zum Häckseln des Ernteguts 4 aufweisen. Da die Häckseltrommel 19 häufig direkt mit einem Motor 20 des Feldhäckslers 1 gekoppelt ist, kann es sein, dass die Häcksellänge im Wesentlichen, ohne Änderung der Motordrehzahl, nur über die Vorpresswalzen 18 einstellbar ist. Andere Anordnungen sind jedoch ebenso möglich. Entsprechend kann auch vorgesehen sein, dass die Häcksellänge nur sekundär über die Vorpresswalzen 18 einstellbar ist.

Der Corncracker 8 weist vorzugsweise zwei Walzen 21 auf, die im Betrieb jeweils mit einer als Maschinenparameter einstellbaren Drehzahl rotieren. Auch diese Drehzahl kann direkt an den Motor 20 gekoppelt sein. Der Erntegutstrom E verläuft vorzugsweise durch einen Spalt 22 mit einer als Maschinenparameter einstellbaren Spaltbreite zwischen den Walzen 21. Die Walzen 21 weisen vorzugsweise eine als Maschinenparameter einstellbare Differenzdrehzahl auf, um die sich die Drehzahl der Walzen 21 unterscheidet. Die Häckseltrommel 19 häckselt das Erntegut 4, der Corncracker 8 schließt die Kornbestandteile 5 auf und zerfasert die Nicht-Kornbestandteile 6. Es kann vorgesehen sein, dass der Corncracker 8 wirkungslos schaltbar ist.

Die IR-Kamera kann entlang des Ernteguttransportwegs 7 hinter dem Corncracker 8 angeordnet sein. Hier und vorzugsweise ist die Kamera 11 an einem Auswurfkrümmer 23 des Feldhäckslers 1 angeordnet.

Hier und vorzugsweise wird der Indikator für die Aufbereitungsqualität einem Benutzer B angezeigt. Diese Anzeige kann auf einem Terminal 24 des Feldhäckslers 1 erfolgen. Vorzugsweise kann der Benutzer B der Kontrollanordnung 9 einen Mindestwert und/oder Höchstwert und/oder einen zu erreichenden Wert für den Indikator für die Aufbereitungsqualität vorgeben und somit die Berechnungsvorschrift anpassen.

Es kann vorgesehen sein, dass die Kontrollanordnung 9 basierend auf dem Indikator für die Aufbereitungsqualität einen Maschinenparameter, insbesondere einen die Aufbereitungsqualität beeinflussenden Maschinenparameter, des Feldhäckslers 1, insbesondere des Corncrackers 7, hinsichtlich eines den Indikator für die Aufbereitungsqualität betreffenden Optimierungsziels optimiert einstellt. Dieses Optimierungsziel kann beispielsweise der vom Benutzer B vorgegebene Mindest- oder Höchstwert oder zu erreichende Wert sein. Das Optimierungsziel kann auch einen geringeren Kraftstoffverbrauch oder dergleichen umfassen. Vorzugsweise ist der optimiert eingestellte Maschinenparameter die Drehzahl der Vorpresswalzen 18 und/oder die Spaltbreite des Corncrackers 8 und/oder die Differenzdrehzahl des Corncrackers 8 und/oder die Drehzahl der Walzen 22 des Corncrackers 8. Die Einstellung kann direkt erfolgen oder indirekt über die Einstellung eines anderen Maschinenparameters, beispielsweise der Drehzahl des Motors 20.

Hier und vorzugsweise ist das Optimierungsziel ein vorbestimmter Anteil zerkleinerter Kornbestandteile 5 mit vorbestimmten geometrischen Eigenschaften und/oder ein vorbestimmter, insbesondere minimaler, Kraftstoffverbrauch. Vorzugsweise ist der vorbestimmte Anteil zerkleinerter Kornbestandteile 5 ein Anteil von mindestens 70 % an zerkleinerten Kornbestandteilen 5 mit einem siebwirksamen Querschnitt von höchstens 4,75 mm. Zusätzlich oder alternativ kann das Optimierungsziel eine mittlere Größe der zerkleinerten Kornbestandteile zwischen 1,18 mm und 4,75 mm sein.

Unter dem siebwirksamen Querschnitt ist ein solcher Querschnitt zu verstehen, der zumindest so groß ist, dass der entsprechende Kornbestandteil 5 nicht durch ein Sieb mit quadratischen Öffnungen von 8 mm Seitenlänge fällt. Dabei ist zu berücksichtigen, dass aufgrund der Zweidimensionalität der Kamera 11 gegebenenfalls nicht alle Seitenlängen eines Kornbestandteils 5 zur Verfügung stehen. Es müssen also entsprechende Annahmen getroffen werden.

Es kann vorgesehen sein, dass die Kontrollanordnung 9 den Maschinenparameter automatisch zur Erreichung des Optimierungsziels regelt. Der Begriff "regeln" ist dabei im engeren Sinne zu verstehen und betrifft die Kombination aus Steuerung und Feedback zu einem Regelkreis.

Es kann vorgesehen sein, dass die Kontrollanordnung 9 in einer Optimierungsroutine unterschiedliche Einstellungen des Maschinenparameters sukzessive einstellt, um eine Abhängigkeit zwischen dem Maschinenparameter und dem Indikator für die Aufbereitungsqualität zu ermitteln und dass die Kontrollanordnung 9 anschließend basierend auf der ermittelten Abhängigkeit den Maschinenparameter automatisch hinsichtlich des Optimierungsziels optimiert regelt. So kann beispielswese vorgesehen sein, dass die Spaltbreite des Corncrackers 8 zu Beginn eines Erntevorgangs gezielt variiert wird, um die Spaltbreite zu ermitteln, bei der die Aufbereitungsqualität außerhalb der gesetzten Grenzen landet.

### Bezugszeichenliste

- 1: Feldhäcksler
- 2: Arbeitsaggregate
- 3: Feldbestand
- 4: Erntegut
- 5: Kornbestandteile
- 6: Nicht-Kornbestandteile
- 7: Ernteguttransportweg
- 8: Corncracker
- 9: Kontrollanordnung
- 10: Optisches Messsystem
- 11: Kamera
- 12: Bild-Regionen
- 13: Spiegel
- 14: Linse
- 15: Lichtquelle
- 16: Sichtfeld
- 17: Vorsatzgerät
- 18: Vorpresswalzen
- 19: Häckseltrommel
- 20: Motor
- 21: Walzen des Corncrackers
- 22: Spalt des Corncrackers
- 23: Auswurfkrümmer
- 24: Terminal
- B: Benutzer
- E: Erntegutstrom

## Patentansprüche

1. Feldhäcksler mit mindestens einem Arbeitsaggregat (2) zum Abernten eines Feldbestandes (3) und zur Verarbeitung von Erntegut (4) des Feldbestandes (3), wobei das Erntegut Kornbestandteile (5) und Nicht-Kornbestandteile (6) umfasst, wobei das Erntegut (4) im Betrieb des Feldhäckslers (1) in einem Erntegutstrom (E) entlang eines Ernteguttransportweges (7) durch den Feldhäcksler (1) transportiert wird,
wobei der Feldhäcksler als Arbeitsaggregat (2) einen in dem Erntegutstrom angeordneten Corncracker (8) aufweist, der im Betrieb die Kornbestandteile zerkleinert,
wobei der Feldhäcksler eine Kontrollanordnung (9) aufweist, die ein an dem Ernteguttransportweg (7) hinter dem Corncracker angeordnetes optisches Messsystem (10) aufweist,
wobei das optische Messsystem (10) eine Kamera (11) zur Aufnahme von Bilddaten des Ernteguts (4) des Erntegutstroms (E) aufweist, wobei die Kamera entlang des Ernteguttransportweges (7) hinter dem Corncracker (8) angeordnet ist,
wobei das optische Messsystem (10) in einer Messroutine mittels der Kamera (11) Bilddaten des Ernteguts (4) erfasst, wobei die Kontrollanordnung (9) in einer Bilderkennungsroutine mittels eines Bilderkennungsalgorithmus in den Bilddaten Bild-Regionen (12) ermittelt, die jeweils einem zerkleinerten Kornbestandteil (5) zugeordnet sind,
**dadurch gekennzeichnet,**
**dass** die Kontrollanordnung (9) in der Bilderkennungsroutine auf Basis der jeweiligen Bild-Regionen (12) geometrische Eigenschaften der jeweils zugeordneten zerkleinerten Kornbestandteile (5) ermittelt und dass die Kontrollanordnung (9) in der Bilderkennungsroutine aus den geometrischen Eigenschaften nach einer vorbestimmten Berechnungsvorschrift einen Indikator für eine Aufbereitungsqualität der zerkleinerten Kornbestandteile (5) ermittelt.

2. Feldhäcksler nach Anspruch 1, **dadurch gekennzeichnet, dass** die Kamera (11) eine Multispektralkamera ist, vorzugsweise, dass die Multispektralkamera Licht aus mindestens drei, vorzugsweise mindestens vier, weiter vorzugsweise mindestens fünf, unterscheidbaren Wellenlängenbereichen aufnimmt, und/oder, dass die Multispektralkamera Licht aus höchstens 15, vorzugsweise höchstens zehn, weiter vorzugsweise höchstens acht, unterscheidbaren Wellenlängenbereichen aufnimmt.

3. Feldhäcksler nach Anspruch 1, **dadurch gekennzeichnet, dass** die Kamera (11) eine Hyperspektralkamera ist, vorzugsweise, dass die Hyperspektralkamera Licht aus mindestens 50, vorzugsweise mindestens 80, weiter vorzugsweise mindestens 150, unterscheidbaren Wellenlängenbereichen aufnimmt.

4. Feldhäcksler nach einem der vorhergehenden Ansprüche, **dadurch gekennzeichnet, dass** die Kamera (11), insbesondere die Multispektralkamera, sichtbares Licht und infrarotes Licht, insbesondere nah-infrarotes Licht, aus unterscheidbaren Wellenlängenbereichen aufnimmt, vorzugsweise, dass die Kamera mindestens einen roten und/oder mindestens einen grünen und/oder mindestens einen blauen Wellenlängenbereich aufnimmt.

5. Feldhäcksler nach Anspruch 1, **dadurch gekennzeichnet, dass** die Kamera (11) eine sichtbares Licht aufnehmende Kamera, insbesondere eine RGB-Kamera, ist, dass das optische Messsystem zusätzlich eine infrarotes Licht aufnehmende IR-Kamera, insbesondere nah-infrarotes Licht aufnehmende NIR-Kamera, zur Aufnahme von IR-Bilddaten des Ernteguts (4) in einem Ausschnitt des Erntegutstroms (E) aufweist, vorzugsweise, dass die Bilddaten RGB-Bilddaten sind, dass das optische Messsystem in der Messroutine mittels der IR-Kamera IR-Bilddaten des Ernteguts (4) erfasst und in der Bilderkennungsroutine den Indikator für die Aufbereitungsqualität aus den RGB-Bilddaten und den IR-Bilddaten ermittelt.

6. Feldhäcksler nach einem der vorhergehenden Ansprüche, **dadurch gekennzeichnet, dass** die Kamera (11) und/oder die zusätzliche IR-Kamera, vorzugsweise im Wesentlichen nur, optische Sensorelemente auf Siliziumbasis oder Indium-Gallium-Arsenid-Basis aufweist.

7. Feldhäcksler nach einem der vorhergehenden Ansprüche, **dadurch gekennzeichnet, dass** der Bilderkennungsalgorithmus auf machine learning, insbesondere deep learning, basiert.

8. Feldhäcksler nach einem der vorhergehenden Ansprüche, **dadurch gekennzeichnet, dass** die geometrischen Eigenschaften geometrische Abmessungen der zerkleinerten Kornbestandteile (5) umfassen, vorzugsweise, dass die geometrischen Abmessungen eine kürzeste Seitenlänge und/oder eine größte Seitenlänge und/oder eine Querschnittsfläche umfassen.

9. Feldhäcksler nach einem der vorhergehenden Ansprüche, **dadurch gekennzeichnet, dass** der Indikator für die Aufbereitungsqualität einen Anteil an zerkleinerten Kornbestandteilen (5) mit vorbestimmten geometrischen Eigenschaften an dem Erntegut (4) oder den Kornbestandteilen (5) abbildet und dass die Berechnungsvorschrift ein Bilden des Anteils umfasst, vorzugsweise, dass der Indikator für die Aufbereitungsqualität einen Anteil an zerkleinerten Kornbestandteilen (5) mit vorbestimmten maximalen und minimalen geometrischen Abmessungen an den Kornbestandteilen (5) abbildet.

10. Feldhäcksler nach einem der vorhergehenden Ansprüche, **dadurch gekennzeichnet, dass** die Arbeitsaggregate (2) des Feldhäckslers (1) zumindest teilweise mit Maschinenparametern einstellbar sind, vorzugsweise, dass der Feldhäcksler (1) als Arbeitsaggregat (2) ein den Erntegutstrom (E) erzeugendes Vorsatzgerät (17) zum Aufnehmen des Feldbestandes (3) aufweist, und/oder, dass der Feldhäcksler (1) als Arbeitsaggregat (2) in dem Erntegutstrom (E) angeordnete Vorpresswalzen (18) mit einer Drehzahl aufweist, über die eine Häcksellänge des Ernteguts (4) einstellbar ist, und/oder, dass der Feldhäcksler (1) als Arbeitsaggregat (2) eine in dem Erntegutstrom (E) angeordnete Häckseltrommel (19) zum Häckseln des Ernteguts (4) aufweist, und/oder, dass der Corncracker (8) zwei Walzen (21) aufweist, die im Betrieb jeweils mit einer als Maschinenparameter einstellbaren Drehzahl rotieren, dass der Erntegutstrom durch einen Spalt (22) mit einer als Maschinenparameter einstellbaren Spaltbreite zwischen den Walzen (21) verläuft und dass die Walzen (21) eine als Maschinenparameter einstellbare Differenzdrehzahl aufweisen, um die sich die Drehzahl der Walzen (21) unterscheidet.

11. Feldhäcksler nach Anspruch 10, **dadurch gekennzeichnet, dass** die IR-Kamera entlang des Ernteguttransportweges (7) hinter dem Corncracker (8) angeordnet ist, vorzugsweise, dass die Kamera (11) an einem Auswurfkrümmer (23) des Feldhäckslers (1) angeordnet ist.

12. Feldhäcksler nach einem der vorhergehenden Ansprüche, **dadurch gekennzeichnet, dass** der Indikator für die Aufbereitungsqualität einem Benutzer (B) angezeigt wird, vorzugsweise, dass der Benutzer (B) der Kontrollanordnung (9) einen Mindestwert und/oder Höchstwert und/oder einen zu erreichenden Wert für den Indikator für die Aufbereitungsqualität vorgeben und somit die Berechnungsvorschrift anpassen kann.

13. Feldhäcksler nach einem der vorhergehenden Ansprüche, **dadurch gekennzeichnet, dass** die Kontrollanordnung (9) basierend auf dem Indikator für die Aufbereitungsqualität einen Maschinenparameter, insbesondere einen den Strukturanteil beeinflussenden Maschinenparameter, des Feldhäckslers (1), insbesondere der Vorpresswalzen (18), hinsichtlich eines den Indikator für die Aufbereitungsqualität betreffenden Optimierungsziels optimiert einstellt, vorzugsweise, dass der Maschinenparameter die Drehzahl der Vorpresswalzen (18) und/oder die Spaltbreite des Corncrackers (21) und/oder die Differenzdrehzahl des Corncrackers (21) und/oder die Drehzahl der Walzen (22) des Corncrackers (21) ist.

14. Feldhäcksler nach Anspruch 13, **dadurch gekennzeichnet, dass** das Optimierungsziel ein vorbestimmter Anteil zerkleinerter Kornbestandteile (5) mit vorbestimmten geometrischen Eigenschaften und/oder ein vorbestimmter, insbesondere minimaler, Kraftstoffverbrauch ist, vorzugsweise, dass der vorbestimmte Anteil zerkleinerter Kornbestandteile (5) ein Anteil von mindestens 70% an zerkleinerten Kornbestandteilen (5) mit einem siebwirksamen Querschnitt von höchstens 4,75 mm, und/oder, dass das Optimierungsziel eine mittlere Größe der zerkleinerten Kornbestandteile (5) zwischen 1,18 mm und 4,75 mm ist.

15. Feldhäcksler nach Anspruch 13 oder 14, **dadurch gekennzeichnet, dass** die Kontrollanordnung (9) den Maschinenparameter automatisch zur Erreichung des Optimierungsziels regelt, vorzugsweise, dass die Kontrollanordnung (9) in einer Optimierungsroutine unterschiedliche Einstellungen des Maschinenparameters sukzessive einstellt um eine Abhängigkeit zwischen dem Maschinenparameter und dem Indikator für die Aufbereitungsqualität zu ermitteln und dass die Kontrollanordnung (9) anschließend basierend auf der ermittelten Abhängigkeit den Maschinenparameter automatisch hinsichtlich des Optimierungsziels optimiert regelt.
